# EUROPÄISCHE PATENTSCHRIFT

(11) **EP 2 785 503 B1**
(45) Veröffentlichungstag und Bekanntmachung des Hinweises auf die Patenterteilung: **25.10.2017**
(21) Anmeldenummer: 12809091.7
(22) Anmeldetag: 14.11.2012
(51) Int. Cl.: B29C 33/02, B29C 33/56, B29C 33/04

(54) **VERFAHREN ZUR HERSTELLUNG EINES FORMWERKZEUGS SOWIE EIN DANACH HERGESTELLTES FORMWERKZEUG**
METHOD FOR PRODUCING A MOLD, AND MOLD SO PRODUCED
PROCÉDÉ DE FABRICATION D'UN OUTIL DE MOULAGE, ET OUTIL DE MOULAGE AINSI PRODUIT

(30) Priorität: 29.11.2011 DE 102011119613
(43) Veröffentlichungstag der Anmeldung: 08.10.2014
(73) Patentinhaber: Airbus Defence and Space GmbH, 85521 Ottobrunn (DE)
(72) Erfinder: JONKE, Dietrich, 82024 Taufkirchen (DE); ENGLHART, Martin, 83104 Schönau (DE); STRACHAUER, Frank, 82319 Starnberg (DE)
(74) Vertreter: Kastel, Stefan
(86) Internationale Anmeldenummer: PCT/DE2012/001089
(87) Internationale Veröffentlichungsnummer: WO 2013/079046

(56) Entgegenhaltungen:
- EP-A1- 2 366 519
- EP-A2- 0 351 154
- WO-A1-2007/028641
- WO-A1-2013/007452
- DE-A1- 4 026 824
- DE-A1-102010 020 090
- DE-C1- 19 716 524
- FR-A1- 2 159 231
- US-A- 3 638 299
- US-A- 5 190 715
- US-A- 5 783 259
- US-A1- 2005 247 393

## Beschreibung

Die Erfindung betrifft ein Formwerkzeug zum Herstellen von insbesondere faserverstärkten Kunststoffformteilen, mehr insbesondere zum Herstellen von Großbauteilen für die Luft- und Raumfahrt, für Kraftwerke wie Windkraftwerke oder zur Verwendung in der Kraftfahrzeugindustrie oder dergleichen. Außerdem betrifft die Erfindung eine Herstellvorrichtung zum Herstellen solcher Kunststoffformteile, insbesondere faserverstärkter Kunststoffformteile. Schließlich betrifft die Erfindung ein Formwerkzeugherstellverfahren zum Herstellen eines solchen Formwerkzeuges und außerdem vorteilhafte Verwendungen des Formwerkzeuges.

Aus der DE 10 2010 014 545 A1 ist eine Vorrichtung und ein Verfahren zur Herstellung eines Komposit-Formteils aus faserverstärktem Kunststoff bekannt, in der ein Formwerkzeug mit einer Formfläche zum Formen des Komposit-Formteils eingesetzt wird. Die Anordnung mit dem Formwerkzeug wird in einem Wärmeofen platziert oder mit geeigneten Heizdecken umschlossen und abgedeckt, um die für den Prozess gewünschte Temperierung zu erreichen.

Ein weiteres Formwerkzeug und eine damit versehene Vorrichtung zur Herstellung von Verbundbauteilen aus faserverstärkten Kunststoffen ist in der DE 10 2009 026 456 A1 offenbart. Dabei wird an einer Formfläche eines Formwerkzeugs zur Formung eines harzgetränkten Fasermaterials eine Filterplatte mit einem porösen Werkstoff angebracht. Es ist beschrieben, dass durch Zufuhr von Wärme mittels einer Heizeinrichtung das Faserverbundteil ausgehärtet wird; die Heizeinrichtung selbst ist jedoch weder gezeigt noch erläutert.

Weitere Herstellverfahren für derartige Bauteile sowie hierzu verwendbare Vorrichtungen sind in der DE 100 13 409 C1 und der DE 101 40 166 A1 beschrieben. Hier wird insbesondere das Vakuuminfusionsverfahren offenbart.

Aus der DE 10 2006 057 641 A1 ist ein Verfahren zur Reparatur und/oder Konturänderung einer Formoberfläche eines Formwerkzeugs bekannt, welches für die industrielle Serienfertigung von CFK-Bauteilen mittels großformatiger Formwerkzeuge einzusetzen ist. Wie darin erläutert, bestehen solche Formwerkzeuge aus Metallen, insbesondere Nickel 36.

Aus der DE 10 2006 057 640 A1 ist ein Verfahren zum Herstellern eines Formwerkzeugs mit einer Verschleißschutzschicht bekannt, wobei die Verschleißschutzschicht durch ein thermisches Spritzen aufgebaut wird. Ein Formwerkzeug-Grundkörper ist aus einem Faserverbund, wie beispielsweise CFK, hergestellt. Ein weiteres Herstellverfahren zum Herstellen eines Formwerkzeuges ist aus der DE 10 2006 057 638 B4 bekannt.

Die EP 1 353 789 B1 betrifft ein Verfahren zum Einspritzen von Kunstharz in ein Formwerkzeug, welches einen faserigen Vorformling enthält. Das Kunstharz wird hierbei von einem ersten und einem zweiten Behälter wechselweise bereitgestellt, wobei die freie Oberfläche des in den Behältern enthaltenen Harzes mittels einer auf der freien Oberfläche ruhenden Heizplatte aufgeheizt wird.

DE 40 26 824 A1 offenbart ein Werkzeug zur Herstellung von Formteilen, das eine Formschale aufweist, welche hinterfüllt ist. Zwischen der Hinterfüllung und der Formschale ist eine Widerstandsheizung angeordnet. Die Hinterfüllung besteht aus einem homogenisierten, ausgehärteten Gemisch aus einem Bindemittel und Eisenpulver.

US 2005/0247393A1 offenbart eine Vorrichtung mit einem ringförmigen Träger, auf den ein nicht vulkanisierter Reifen aufgezogen wird, der unter Hitzeeinwirkung vulkanisiert wird. Der ringförmige Träger besteht aus einem Metall, auf dem eine elektrische Widerstandsheizung vorgesehen ist, die durch ein Spritzverfahren mit Hilfe einer Maske aufgespritzt wird oder die in Vertiefungen in dem metallischen Träger eingebettet wird. Die elektrische Widerstandsheizung wird durch eine Schutzschicht aus einem keramischen Material abgedeckt, die durch ein Plasmaspritzverfahren aufgebracht wird.

EP 2 366 519 A1 offenbart ein Formwerkzeug mit einem Werkzeugeinsatz, der eine Schichtstruktur aufweist, die in Richtung der Kavität des Werkzeugs eine Isolierschicht, darin eingebettet Temperiermittelkanäle und eine Metallschicht (7) umfasst. Die Schichten werden durch ein Spritzverfahren aufgebracht.

Zum Formen besonders großer Kunststoffformteile, wie sie beispielsweise als Teile von Flugzeugen oder Hubschraubern oder sonstigen Luftfahrzeugen, als Teile von Bauteilen für die Raumfahrt oder beispielsweise in Windkraftanlagen (Propeller, Rotoren) eingesetzt werden, werden Formwerkzeuge vornehmlich aus Metall eingesetzt. Ist zur Herstellung des Kunststoffformteils eine bestimmte Temperierung durch Heizen und/oder Kühlen notwendig, so wird nach dem vorerwähnten Stand der Technik beispielsweise Wärme von außerhalb zugeführt. Die entsprechenden Temperiereinrichtungen, also beispielsweise eine Heizeinrichtung, sind hierbei außerhalb und somit in großem Abstand zu der Formoberfläche angeordnet. Der gesamte Metallblock muss aufgeheizt werden, was zu langen Aufheizphasen bzw. Kühlphasen führt. Dieses Aufheizen oder Abkühlen erfordert eine hohe Energie, da die Wärmetransportwege bis zur Erreichung des Wärmeübergangs an der Grenzfläche Bauteil-Formoberfläche lang sind.

Die bekannten Werkzeuge sind insbesondere aus Vollmaterial und vielfach aus Metalllegierungen aufgebaut und haben deshalb ein hohes spezifisches Gewicht sowie eine "tote" Masse, die miterhitzt bzw. mitgekühlt werden muss. Dies führt gerade bei großen Formen, wie sie in der Flugzeugindustrie zum Einsatz kommen, zu hohen Energieverlusten. Hierbei sind durchaus Formen in der Größenordnung von bis zu 8 bis 10 Meter Länge und 10 Tonnen Gewicht im Einsatz.

Die bekannten Formwerkzeuge werden zeitintensiv und kostenintensiv hergestellt, beispielsweise indem sie aus einem vollen Block zerspant werden oder in sehr aufwändigen Gießverfahren gegossen werden. Eine Handhabung der Formen und insbesondere ein Transport ist teilweise nur mit Schwerlastkränen durchführbar. Werden dagegen Kunststoffformen als Formwerkzeuge eingesetzt, wird ein Wärmefluss zur Werkzeugoberfläche durch die isolierenden Eigenschaften des Kunststoffes erschwert.

Aufgabe der Erfindung ist es, ein verbessertes Formwerkzeugherstellverfahren und ein verbessertes Formwerkzeug zum Herstellen von Kunststoffformteilen, insbesondere von faserverstärkten Kunststoffformteilen, bereitzustellen, mit dem eine schnellere und weniger energieaufwändigere Formung ermöglicht ist.

Diese Aufgabe wird durch ein Formwerkzeugherstellverfahren mit den Merkmalen des Anspruchs 1 und ein Formwerkzeug mit den Merkmalen des Anspruchs 6 gelöst.

Eine Herstellvorrichtung zum Herstellen von (insbesondere faserverstärkten) Kunststoffformteilen unter Verwendung eines solchen Formwerkzeuges ist Gegenstand eines Nebenanspruchs.

Vorteilhafte Ausgestaltungen der Erfindung sind Gegenstand der Unteransprüche. Die Erfindung schafft ein Formwerkzeug zum Herstellen von Kunststoffformteilen, mit einem Grundkörper aus einem ersten Material, der an einer Formoberfläche mit einer Beschichtung aus einem zweiten Material versehen ist, wobei in einem Grenzbereich zwischen dem Grundkörper und der Beschichtung eine Temperiereinrichtung vorgesehen ist, die zwischen dem ersten und dem zweiten Material eingebettet ist, wobei das Formwerkzeug nach dem erfindungsgemäßen Verfahren erhältlich ist. Das erste Material ist aus einer Gruppe von Materialien ausgewählt, die Kunststoff, insbesondere geschäumten Kunststoff, Keramik, faserverstärktes Kunststoff- oder Keramikmaterial aufweist. Das zweite Material ist aus einer Gruppe ausgewählt, die Kunststoff, Kunststoffschaum, Leichtmetall, Leichtmetallschaum, Invar sowie Invar in Kombination mit anderen Metallen, Keramiken, Karbiden oder Kunststoffen, enthält. Das zweite Material ist auf den Grundkörper in einem Spritzverfahren aufgespritzt.

Der Begriff Invar wird hier als Oberbegriff für eine Gruppe von Metallen, Legierungen oder Verbindungen verwendet, welche die Eigenschaft besitzen, in wenigstens einem bestimmten Temperaturbereich anomal kleine oder zum Teil negative Wärmeausdehnungskoeffizienten zu haben. Der Name resultiert aus der Invarianz der Dehnung bezüglich einer Temperaturänderung.

Vorteilhaft wird das zweite Material in einem thermischen Spritzverfahren auf den Grundkörper aufgespritzt.

Bei einer vorteilhaften Ausgestaltung ist vorgesehen, dass die Temperiereinrichtung Heiz- und/oder Kühlkanäle oder-leitungen für ein Heiz- oder Kühlmedium und/oder elektrische Heizleiter aufweist.

Besonders bevorzugt ist, dass der Grundkörper an dessen Grenzfläche zu der Beschichtung mit wenigstens einer Ausnehmung versehen ist, in der die Temperiereinrichtung aufgenommen ist, wobei der Grundkörper und die in der wenigstens einen Ausnehmung eingefügte Temperiereinrichtung gemeinsam mit dem zweiten Material beschichtet sind.

Vorzugsweise ist vorgesehen, dass die obere Oberfläche der Beschichtung mit einer Veredelungsschicht aus einem dritten Material versehen ist.

Das Formwerkzeug ist in einer bevorzugten Ausgestaltung insbesondere zur Herstellung faserverstärkter Kunststoffformteile geeignet. Aber auch nicht-faserverstärkte Kunststoffformteile lassen sich mit einem derartigen Formwerkzeug herstellen. Insbesondere ist das Formwerkzeug zur Herstellung von Formteilen mit vorbestimmten Prozesstemperaturen geeignet. Z.B. sind nicht verstärkte Thermoplaste, Duromere oder auch die jeweiligen verstärkten Verbundwerkstoffe formbar. Eine Verstärkung kann durch Fasern, wie z.B. Glasfasern und/oder Kohlefasern, erfolgen, es sind aber auch weitere Verstärkungsmaterialien denkbar.

Bei verstärkten Kunststoffformteilen sind als Matrixmaterialien z.B. Thermoplaste oder Duromere denkbar. Vorzugsweise ist oder enthält das Matrixmaterial wenigstens ein Thermoplast, ausgewählt aus einer Gruppe, die PE, PSU, PES, SRP, Polyimid, Polyamid und Polyetherimid (PEI) enthält, oder wenigstens ein Duromer ausgewählt aus einer Gruppe, die Epoxidharz, Aminoplast, Phenoplast, Polyacrylat und Polyurethan enthält. Thermoplaste können z.B. amorph oder semi-kristallin sein. Bevorzugt ist oder enthält das Verstärkungsmaterial ein Material aus einer Gruppe, die Fasern, Kohlefasern, Glasfasern, kohlenstoffhaltige Nanopartikel, Siliziumoxid, Titanoxid und Polymere enthält.

Gemäß eines weiteren Aspekts schafft die Erfindung eine Herstellvorrichtung zum Herstellen von Kunststoffformteilen, insbesondere aus kohlefaserverstärkten oder glasfaserverstärkten Kunststoffen, mehr insbesondere zum Herstellen von Bauteilen für Luft- oder Raumfahrzeuge, von Bauteilen von Landfahrzeugen, wie Kraftfahrzeugen, von Bauteilen von Windkraftanlagen oder dergleichen, wobei die Herstellvorrichtung ein Formwerkzeug nach der Erfindung oder nach dessen vorteilhafter Ausgestaltungen aufweist.

Gemäß eines weiteren Aspekts schafft die Erfindung ein Herstellverfahren zum Herstellen von Kunststoffformteilen, insbesondere aus kohlefaserverstärkten oder glasfaserverstärkten Kunststoffen, und/oder zum Herstellen von verstärkten oder unverstärkten Kunststoff-Bauteilen für Luft- oder Raumfahrzeuge, von verstärkten oder unverstärkten Kunststoff-Bauteilen von Landfahrzeugen, wie Kraftfahrzeugen, von insbesondere verstärkten Kunststoff-Bauteilen von Windkraftanlagen oder dergleichen, wobei in dem Herstellvahren das Kunststoffformteil in einem Formwerkzeug nach der Erfindung oder nach dessen vorteilhafter Ausgestaltungen geformt wird. Vorzugsweise wird während der Herstellung eine Temperatur einer das Kunststoffformteil kontaktierende Formoberfläche durch Ansteuerung der Temperiereinrichtung in vorbestimmter Weise verändert.

Gemäß eines weiteren Aspekts schafft die Erfindung ein Formwerkzeugherstellverfahren zum Herstellen eines Formwerkzeugs für die Herstellung von insbesondere faserverstärkten Kunststoffformteilen, mehr insbesondere für die Herstellung von Kunststoffgroßbauteilen für Luft- und Raumfahrt, Kraftfahrzeugindustrie oder Kraftwerksindustrie, gekennzeichnet durch
a) Bereitstellen eines Grundkörpers aus einem ersten Material mit einer zum Bilden einer Formoberfläche geformten Grenzfläche,
b) Anbringen einer Temperiereinrichtung zum Temperieren des Formwerkzeugs an der Grenzfläche, und
c) Beschichten der Grenzfläche des Grundkörpers und der daran angebrachten Temperiereinrichtung durch Aufspritzen eines zweiten Materials in einem Spritzverfahren, um so die Formoberfläche vollständig an einer Beschichtung aus zweiten Material auszubilden. Das erste Material ist aus einer Gruppe von Materialien ausgewählt, die Kunststoff, insbesondere geschäumten Kunststoff, Keramik, faserverstärktes Kunststoff- oder Keramikmaterial aufweist. Das zweite Material ist aus einer Gruppe ausgewählt, die Kunststoff, Kunststoffschaum, Leichtmetall, Leichtmetallschaum, Invar sowie Invar in Kombination mit anderen Metallen, Keramiken, Karbiden oder Kunststoffen, enthält.

Vorteilhaft ist das Spritzverfahren ein thermisches Spritzverfahren.

Bei einer vorteilhaften Ausgestaltung ist vorgesehen, dass Schritt b) enthält:
b1) Einbringen wenigstens einer Ausnehmung (insbesondere eines Rücksprungs) in der Grenzfläche des Grundkörpers und
b2) Einlegen wenigstens eines Heiz- oder Kühlelements der Temperiereinrichtung in die wenigstens eine Ausnehmung.

Es ist bevorzugt, dass Schritt b) weiter enthält:
b3) Befestigen des wenigstens einen Heiz- oder Kühlelements mittels Befestigungselementen, wie insbesondere Klammern, Klebern oder Heftmaterial.

Besonders bevorzugt ist, dass Schritt a) enthält:
a1) Herstellen des Grundkörpers durch Schäumen aus einem Kunststoff.Gemäß eines weiteren Aspekts schafft die Erfindung eine Verwendung des Formwerkzeugs gemäß des ersten Aspekts oder dessen vorteilhafter Ausgestaltungen zum Herstellen von faserverstärkten oder nicht-faserverstärkten Kunststoffformteilen, insbesondere auf der Basis von Thermoplasten oder Duromeren. Vorzugsweise ist eine Verwendung das Formwerkzeug zur Herstellung von Formteilen mit vorbestimmten Prozesstemperaturen vorgesehen. Z.B. werden unter Verwendung des Formwerkzeugs nicht verstärkte Thermoplaste, Duromere oder auch die jeweiligen verstärkten Verbundwerkstoffe geformt. Eine Verstärkung der so zu formenden Kunststoffformteile kann durch Fasern, wie z.B. Glasfasern und/oder Kohlefasern, erfolgen, es sind aber auch weitere Verstärkungsmaterialien denkbar.

Besonders bevorzugt lässt sich das Formwerkzeug zur Formung eines verstärkten Kunststoffformteils verwenden, dessen Matrixmaterial aus Thermoplast oder Duromer gebildet ist. Vorzugsweise ist oder enthält das Matrixmaterial wenigstens ein Thermoplast, ausgewählt aus einer Gruppe, die PE, PSU, PES, SRP, Polyimid, Polyamid und Polyetherimid (PEI) enthält, oder wenigstens ein Duromer ausgewählt aus einer Gruppe, die Epoxidharz, Aminoplast, Phenoplast, Polyacrylat und Polyurethan enthält. Vorzugsweise ist das Thermoplast amorph oder semi-kristallin. Bevorzugt ist oder enthält das Verstärkungsmaterial ein Material aus einer Gruppe, die Fasern, Kohlefasern, Glasfasern, kohlenstoffhaltige Nanopartikel, Siliziumoxid, Titanoxid und Polymere enthält.

Besonders bevorzugt kann das Formwerkzeug zur Herstellung von Bauteilen und Großbauteilen für die Luft- und Raumfahrt, von Flugzeugen oder Hubschraubern, für Kraftwerke, wie Windkraftwerke, von Propellern und Rotoren für Windkraftanlagen, in der Kraftfahrzeugindustrie, von Bauteilen von Landfahrzeugen, wie Kraftfahrzeugen, verwendet werden.

Durch die Erfindung und/oder deren vorteilhaften Ausgestaltungen wird es ermöglicht, in Formwerkzeugen eine oberflächennahe Heizung und/oder Kühlung zu realisieren. Dies ist insbesondere auch bei Werkzeugen ermöglicht, die aus Kunststoffen oder Verbundwerkstoffen (Compounds) aufgebaut sind. Schwere und aufwändig handelbare Werkzeuge mit schlechter Energiebilanz können durch sehr leichte Werkzeuge mit hoher Effizienz und mit geringem Energieverbrauch ersetzt werden.

Vorteile vorteilhafter Ausgestaltungen der Erfindung sind:
- Es können ultraleichte Materialien (bevorzugt Kunststoffschäume) verwendet werden, die sehr gut mechanisch zerspanbar und mit geringem Energieaufwand handhabbar sind.
- Es ist ein Aufbringen funktioneller Oberflächenschichten über Beschichtungen - insbesondere Spritztechnik - möglich, wobei diese Oberflächen mit selbigen Verfahren auf gleiche Weise auch bei Beschädigungen wieder repariert werden können.
- Bei geeigneter Kombination von Basismaterial (insbesondere erstes Material) und Oberflächenmaterialauftrag (insbesondere zweites Material) ist ein Auftrag durch thermisches Spritzen oder dergleichen möglich.
- Es sind unterschiedliche Temperiereinrichtungen oberflächennah in ein Formwerkzeug integrierbar.
- Zum Beispiel sind ein Heiz-/Kühlsystem oder auch nur ein Heizsystem oberflächennah in das Formwerkzeug integrierbar.
- Das Formwerkzeug kann aus Metall, Kunststoff, Keramik und/oder aus Verbundmaterialien (Compounds) bestehen.
- Bevorzugt ist der Grundkörper aus Kunststoff (insbesondere geschäumtem Kunststoff) hergestellt. Hierdurch wird ein sehr leichtes Basismaterial geschaffen.
- Es kann ein Heiz-/Kühlsystem in Rohrform mit beliebigem Querschnittsprofil, wie z.B. quadratisch, rechteckig oder dergleichen, vorgesehen sein, um einen Mediendurchfluss von Kühl- oder Heizmedien zu gewährleisten.
- Weiter sind auch Heizsysteme (z.B. ohne Kühlung) auf elektrischer Basis denkbar. Diese können beispielsweise auf dem Prinzip der Widerstandsheizung stromdurchflossener Leiter beruhen. Beispielsweise kann ein Flachbandheizer zum Bilden der Temperiereinrichtung verwendet werden.

Durch Auswahl geeigneter Spritzmaterialien, insbesondere in Kombination mit einem dazu passenden Grundwerkstoff, wie vorzugsweise Kunststoffe, Kunststoffschäume, Leichtmetalle und deren Schäume sowie Basismaterialien mit besonders geringer Dichte, lassen sich definierte Eigenschaften erzielen, wie z.B. ein besonders niedriger Wärmeausdehnungskoeffizient, gute Verschleißbeständigkeit, hohe Wärmeleitfähigkeit, Reparaturfähigkeit, gute Entformbarkeit usw. Es lassen sich hier die verschiedenen, in dem eingangs genannten Stand der Technik beschriebenen Materialien und Eigenschaften kombinieren.

Ein bevorzugtes Material für die Beschichtung wäre z.B. Invar, alleine oder in Kombination mit anderen Metallen, Keramiken, Karbiden oder Kunststoffen, um so gewünschte Oberflächen- bzw. Schichteigenschaften zu erhalten.

Bevorzugt lassen sich mit dem Formwerkzeug kurze Aufheizzeiten oder Abkühlzeiten erreichen, wodurch eine Fertigungskadenz der Bauteile pro Arbeitsschicht erhöht werden kann.

Vorzugsweise wird ein Formwerkzeug mit integrierten Heizkanälen/Kühlkanälen geschaffen.

Es lassen sich effiziente und umweltschonende Werkzeugkonzepte für sämtliche Formvorgaben vom Prototyp bis zur Serienfertigung mit beliebigen Heiz- oder Heiz-/Kühlsystemen aufbauen.

Ein optimierter Wärmeübergang zwischen Werkzeugform und herzustellendem Bauteil ist möglich.

Aufgrund der Möglichkeit der Einbettung der Temperiereinrichtung ist eine hohe Gestaltungsfreiheit in drei Dimensionen zur Einbringung der Heiz-/Kühlsysteme gegeben.

Durch Beschichtungsverfahren ist auch eine Reparatureignung gegeben.

Im Betrieb mit dem Formwerkzeug lässt sich ein Herstellverfahren zum Herstellen von Kunststoffformteilen erreichen, bei dem eine Erwärmung oder Kühlung nur dort erfolgt, wo sie benötigt wird. Es lässt sich eine selektive Heizung und/oder Kühlung erreichen.

Es sind Kunststoff-Formwerkzeuge in Leichtbauweise mit geringem spezifischen Gewicht herstellbar, die über eine Temperiereinrichtung, also insbesondere über Heiz-/Kühlsysteme verfügen. Vorzugsweise ist die Temperiereinrichtung, beispielsweise ein Heiz-/Kühlsystem bzw. nur ein Heizsystem, durch ein Beschichtungsverfallren (z.B. thermisches Spritzen) haftfest mit dem Grundkörper, d.h. mit einem Werkzeug oder Werkzeugunterbau, verbunden.

Zum Einbinden der Temperiereinrichtung und für das oberflächennahe Einbetten können beispielsweise mechanische Vorarbeiten an dem Grundkörper zwecks einer Konturierung für nachfolgende Ablage der Heiz-/Kühlsysteme durchgeführt werden. Beispielsweise kann eine später als Formfläche zu verwendende Oberfläche des Formwerkzeuges durch Fräsungsschritte oder sonstige Zerspanungsschritte mit einer entsprechenden Konturierung zum Schaffen von Ausnehmungen oder dergleichen für Heiz- oder Kühlelemente versehen werden. Es ist auch denkbar, bei der Herstellung des Grundkörpers diesen von vorneherein mit einer entsprechenden Konturierung zu versehen.

In einer entsprechenden Konturierung lassen sich Heiz- oder Kühlelemente ablegen und gegebenenfalls vor einer Einbettung durch Auftragen der zweiten Materialschicht mit geeigneten Befestigungselementen vorfixieren. Hier können Klammern, Heftklammern, Klebstoffe usw. eingesetzt werden.

Der Einsatz des hier beschriebenen Formwerkzeuges in einer Herstellvorrichtung zum Herstellen von Kunststoffformteilen ermöglicht eine Erhöhung der Stückzahl pro Zeiteinheit bei der Fertigung durch drastische Verkürzung der Aufheizzeiten sowie Abkühlzeiten.

Bei der Herstellung des Formwerkzeuges selbst lassen sich unterschiedliche Oberflächengeometrien und unterschiedliche Anforderungen an lokal benötigte Aufheizungen oder Abkühlungen schnell umsetzen, wenn der Grundkörper in Leichtbauweise, beispielsweise aus geschäumten Kunststoffen oder dergleichen oder aus sonstigen extrem einfach zerspanbaren Basismaterialien, aufgebaut wird.

Ausführungsbeispiele der Erfindung werden nachfolgend anhand der beigefügten Zeichnung näher erläutert. Darin zeigt:
- Fig. 1: eine Querschnittsdarstellung eines Ausschnitts eines Formwerkzeuges zur Herstellung von Kunststoffformteilen gemäß einer ersten Ausführungsform;
- Fig. 2: eine Querschnittsdarstellung eines Ausschnitts eines Formwerkzeuges zur Herstellung von Kunststoffmaterialien gemäß einer zweiten Ausführungsform;
- Fig. 3: eine Querschnittsdarstellung eines Ausschnitts eines Formwerkzeuges zur Herstellung von Kunststoffmaterialien gemäß einer dritten Ausführungsform; und
- Fig. 4: eine Querschnittsdarstellung eines Ausschnitts eines Formwerkzeuges zur Herstellung von Kunststoffmaterialien gemäß einer vierten Ausführungsform.

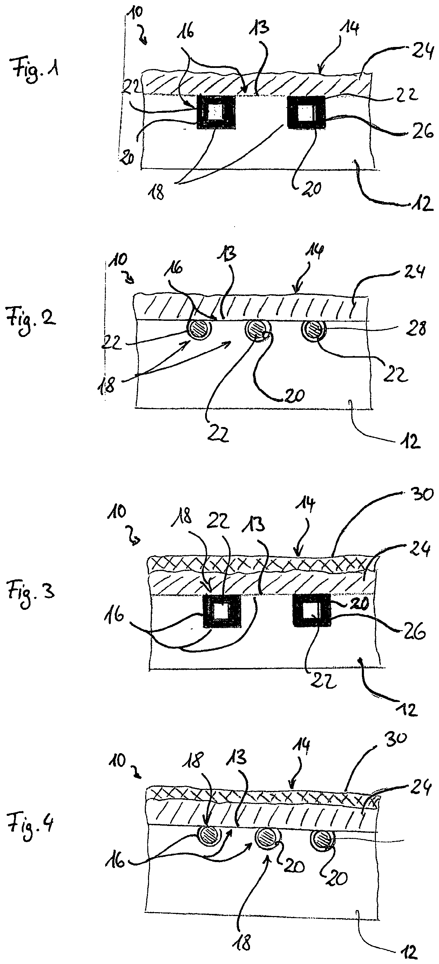

In den Fig. 1 bis 4 sind unterschiedliche Ausführungsformen eines Formwerkzeugs 10 zum Herstellen von faserverstärkten Kunststoffformteilen in Querschnittsdarstellung gezeigt.

Das Formwerkzeug weist einen Grundkörper 12 auf, der als Formkörper oder Basiskörper dient und an einer Oberfläche zum Bilden einer Formoberfläche 14 für das Kunststoffformteil entsprechend geformt ist.

An der zum Bilden der Formoberfläche 14 vorgesehenen Oberfläche des Grundkörpers 12 ist dieser mit einer Konturierung 16 zur Aufnahme einer Temperiereinrichtung 18 versehen.

Zum Beispiel weist die Konturierung 16 an der die Formoberfläche 14 bildenden Grenzfläche 13 des Grundkörpers eine oder mehrere Ausnehmungen 20 zur Aufnahme von Heiz- und/oder Kühlelementen 22 der Temperiereinrichtung 18 auf. Die Konturierung 16 und die daran aufgenommene Temperiereinrichtung 18 ist mit einer Beschichtung 24 aus einem zweiten Material zum Bilden der Werkzeugoberfläche versehen. Vorzugsweise ist zum Bilden der Ausnehmung 20 die Grenzfläche 13 entsprechend konturiert, so dass die Aufnahmestruktur, in der die Heiz- oder Kühlelemente 22 aufgenommen sind, an dem noch unbeschichteten Grundkörper 12 noch offen liegen. In diese Konturen wird im Rahmen der Herstellung des Formwerkzeuges 10 die Temperiereinrichtung 18 durch Einlegen der Heiz- und/oder Kühlelemente 22 und eventuelles Vorfixieren durch (nicht dargestellte) Befestigungselemente vorfixiert.

Die Ausnehmungen 20 und die Heiz- und/oder Kühlelemente 22 sind aneinander angepasst, so dass sie an der Grenzfläche im Wesentlichen bündig abschließen, um dort die gewünschte Formoberfläche ausbilden zu können.

Anschließend wird die so gebildete Einheit aus Grundkörper 12 und Temperiereinrichtung 18 in einem thermischen Spritzverfahren mit dem zweiten Material beschichtet, so dass die Grenzfläche 13 und die darauf angebrachte Temperiereinrichtung 18 beschichtet wird. Hierdurch wird die Temperiereinrichtung 18 zwischen dem ersten Material des Grundkörpers 12 und dem zweiten Material der Beschichtung 24 eingebettet und durch die Beschichtung an dem Grundkörper 12 anhaftend fixiert.

Dieser vorerwähnte bevorzugte Grundaufbau ist allen vier in den Figuren dargestellten Ausführungsformen des Formwerkzeuges 10 gemeinsam.

Im Folgenden werden die Unterschiede der unterschiedlichen Ausführungsformen erläutert.

Bei der in Fig. 1 dargestellten ersten und bei der in Fig. 3 dargestellten dritten Ausführungsform sind die Heiz- und/oder Kühlelemente 22 durch Heiz-/Kühlkanäle 26 gebildet, durch welche ein Heizmedium oder Kühlmedium geleitet werden kann.

Bei der in Fig. 2 dargestellten zweiten Ausführungsform und der in Fig. 4 dargestellten vierten Ausführungsform sind die Heiz- und/oder Kühlelemente 22 durch eine Widerstandsheizung 28 verwirklicht, welche durch Hindurchleiten elektrischen Stroms aufheizbar ist.

Bei der in Fig. 1 dargestellten ersten Ausführungsform und der in Fig. 2 dargestellten zweiten Ausführungsform ist die Werkzeugoberfläche und damit die eigentliche zum Formen dienende Formoberfläche 14 unmittelbar an der freien Oberfläche der Beschichtung 24 ausgebildet.

Bei der in Fig. 3 dargestellten dritten Ausführungsform und der in Fig. 4 dargestellten vierten Ausführungsform weist die Beschichtung 24 an ihrer äußeren Oberfläche noch eine Veredelungsschicht 30 auf, so dass die eigentliche Formoberfläche 14 an der Oberfläche der Veredelungsschicht 30 ausgebildet ist.

Die Beschichtung 24 und/oder die Veredelungsschicht 30 lässt sich durch ein thermisches Spritzen durchführen, wie es näher in der DE 10 2006 057 641 A1 beschrieben und dargestellt ist. Es wird für weitere Einzelheiten ausdrücklich auf diese Druckschrift verwiesen. Wie darin erläutert, lassen sich auch eventuelle Schäden eines gebrachten Formwerkzeuges durch entsprechendes thermisches Spritzen repararieren.

Einzelheiten zu der Möglichkeit eines Aufbaus des Grundkörpers 12 des Formwerkzeugs 10 aus Kunststoffmaterialien sowie bezüglich des Vorsehens einer Verschleißschutzbeschichtung und/oder Veredelungsbeschichtung sind in der DE 10 2006 057 640 A1 näher erläutert und beschrieben. Es wird für weitere Einzelheiten ausdrücklich auf diese Druckschrift verwiesen.

Das Formwerkzeug 10 lässt sich in einer Herstellvorrichtung zur Herstellung von Komposit-Formteilen aus faserverstärktem Kunststoff integrieren. Beispiele für Herstellvorrichtungen, in denen das Formwerkzeug 10 verwendbar ist, sind in der DE 10 2010 014 545 A1, der EP 1 353 789 B1, der DE 10 2009 026 456 A1, der DE 10 2008 058 940 A1, der DE 100 13 409 C1, der DE 101 40 166 A1 oder der DE 10 2008 038 295 A1 beschrieben und gezeigt. Die verbleibenden Teile solcher Herstellvorrichtungen sind aus den vorerwähnten Dokumenten entnehmbar und werden daher hier nicht näher erläutert. Selbstverständlich lassen sich die hier beschriebenen Formwerkzeuge 10 auch in allen anderen Herstellvorrichtungen zur Herstellung von Kunststoffformteilen mit entsprechend Prozessvorgaben gewünschter Temperierung an den Formoberflächen einsetzen.

Unter Verwendung des Formwerkzeuges 10 sind unterschiedliche Verfahren zur Herstellen von Kunststoffformteilen durchführbar, wovon einige Möglichkeiten im Folgenden näher erläutert werden.

Das Formwerkzeug 10 ist insbesondere zur Herstellung faserverstärkter Kunststoffformteile geeignet. Aber auch nicht-faserverstärkte Kunststoffformteile lassen sich mit dem Formwerkzeug 10 herstellen. Durch die Temperiereinrichtung 18 lassen sich vorbestimmte Prozesstemperaturen bei der Herstellung der Formteilen erreichen. Dadurch sind z.B. nicht verstärkte Thermoplaste, Duromere oder auch die jeweiligen verstärkten Verbundwerkstoffe formbar. Eine Verstärkung kann durch Fasern, wie z.B. Glasfasern und/oder Kohlefasern, erfolgen, es sind aber auch weitere Verstärkungsmaterialien denkbar.

Es lassen sich verstärkte Kunststoffformteilen mit thermoplastischen oder duromeren Matrixmaterialien vorteilhaft formen. Formbar sind z.B. Matrixmaterialen aus Thermoplast, wie z.B. PE, PSU, PES, SRP, Polyimid, Polyamid und Polyetherimid (PEI), oder aus Duromer wie z.B. Epoxidharz, Aminoplast, Phenoplast, Polyacrylat und Polyurethan. Thermoplaste können z.B. amorph oder semi-kristallin sein. Auch unterschiedliche Verstärkungsmaterialien können in den mit dem Formwerkzeug 10 zu formenden Bauteilen eingebunden sein, z.B. sind die Bauteile durch wenigstens ein Material aus einer Gruppe, die Fasern, Kohlefasern, Glasfasern, kohlenstoffhaltige Nanopartikel, Siliziumoxid, Titanoxid und Polymere enthält, verstärkt.

Aufgrund dessen, dass die Temperiereinrichtung 18 nahe der Formoberfläche angebracht ist, lassen sich auch Herstellverfahren mit größeren Temperaturgradienten mit geringem Energieeinsatz durchführen. Die Temperaturgradienten lassen sich einfach durch entsprechende Ansteuerung der Temperiereinrichtung 18 steuern.

### Bezugszeichenliste:

- 10: Formwerkzeug
- 12: Grundkörper
- 13: Grenzfläche des Grundkörper
- 14: Formoberfläche
- 16: Konturierung
- 18: Temperiereinrichtung
- 20: Ausnehmung
- 22: Heiz- und/oder Kühlelement
- 24: Beschichtung
- 26: Heiz-/Kühlkanal
- 28: Widerstandsheizung
- 30: Veredelungsschicht

## Patentansprüche

1. Formwerkzeugherstellverfahren zum Herstellen eines Formwerkzeugs (10) für die Herstellung von Kunststoffformteilen, umfassend:
a) Bereitstellen eines Grundkörpers (12) aus einem ersten Material mit einer zum Bilden einer Formoberfläche (14) geformten Grenzfläche (13),
b) Anbringen einer Temperiereinrichtung (18) zum Temperieren des Formwerkzeugs an der Grenzfläche (13),
c) Beschichten der Grenzfläche (13) des Grundkörpers (12) und der daran angebrachten Temperiereinrichtung (18) durch Aufspritzen eines zweiten Materials in einem Spritzverfahren, um so die Formoberfläche (14) vollständig auf einer Beschichtung (24) aus zweiten Material auszubilden
wobei das erste Material ausgewählt ist aus einer Gruppe von Materialien, die Kunststoff, insbesondere geschäumter Kunststoff, Keramik, Verbundmaterial, faserverstärktes Kunststoff- oder Keramikmaterial aufweist, und
wobei das zweite Material ausgewählt ist aus einer Gruppe von Materialien, die Kunststoff, Kunststoffschaum, Leichtmetall, Leichtmetallschaum, Invar sowie Invar in Kombination mit anderen Metallen, Keramiken, Karbiden oder Kunststoffen, enthält.

2. Formwerkzeugherstellungsverfahren nach Anspruch 1,
**dadurch gekennzeichnet,**
**dass** das Spritzverfahren ein thermisches Spritzverfahren ist.

3. Formwerkzeugherstellverfahren nach Anspruch 1 oder 2,
**dadurch gekennzeichnet,**
**dass** Schritt b) enthält:
b1) Einbringen wenigstens einer Ausnehmung (20) in der Grenzfläche des Grundkörpers (12) und
b2) Einlegen wenigstens eines Heiz- oder Kühlelements (22) der Temperiereinrichtung (18) in die wenigstens eine Ausnehmung (20).

4. Formwerkzeugherstellverfahren nach Anspruch 3,
**dadurch gekennzeichnet,**
**dass** Schritt b) weiter enthält:
b3) Befestigen des wenigstens einen Heiz- oder Kühlelements (22) mittels Befestigungselementen, wie insbesondere Klammern, Klebstoff oder Heftmaterial.

5. Formwerkzeugherstellverfahren nach einem der Ansprüche 1 bis 4,
**dadurch gekennzeichnet,**
**dass** Schritt a) enthält:
a1) Herstellen des Grundkörpers (12) durch Schäumen aus einem Kunststoff.

6. Formwerkzeug (10) zum Herstellen von Kunststoffformteilen, mit einem Grundkörper (12) aus einem ersten Material, der an einer Formoberfläche (14) mit einer Beschichtung (24) aus einem zweiten Material versehen ist, wobei in einem Grenzbereich zwischen dem Grundkörper (12) und der Beschichtung (24) eine Temperiereinrichtung (18) vorgesehen ist, die zwischen dem ersten und dem zweiten Material eingebettet ist,
erhältlich nach einem Verfahren nach einem der Ansprüche 1 bis 5,
wobei das erste Material ausgewählt ist aus einer Gruppe von Materialien, die Kunststoff, insbesondere geschäumter Kunststoff, Keramik, faserverstärktes Kunststoff- oder Keramikmaterial aufweist, und
wobei das zweite Material ausgewählt ist aus einer Gruppe von Materialien, die Kunststoff, Kunststoffschaum, Leichtmetall, Leichtmetallschaum, Invar sowie Invar in Kombination mit anderen Metallen, Keramiken, Karbiden oder Kunststoffen, enthält, und
wobei das zweite Material in einem Spritzverfahren auf den Grundkörper (12) aufgespritzt ist.

7. Formwerkzeug nach Anspruch 6,
**dadurch gekennzeichnet,**
**dass** das zweite Material in einem thermischen Spritzverfahren auf den Grundkörper (12) aufgespritzt ist.

8. Formwerkzeug nach einem der Ansprüche 6 und 7,
**dadurch gekennzeichnet,**
**dass** die Temperiereinrichtung (18) wenigstens einen Heiz- und/oder Kühlkanal (26) oder -leitung für ein Heiz- oder Kühlmedium und/oder wenigstens einen elektrische Heizleiter aufweist.

9. Formwerkzeug nach einem der Ansprüche 6 bis 8,
**dadurch gekennzeichnet,**
**dass** der Grundkörper (12) an dessen Grenzfläche (13) zu der Beschichtung (24) mit wenigstens einer Ausnehmung (20) versehen ist, in der die Temperiereinrichtung (18) aufgenommen ist, wobei der Grundkörper (12) und die in der wenigstens einen Ausnehmung (18) eingefügte Temperiereinrichtung gemeinsam mit dem zweiten Material beschichtet sind.

10. Formwerkzeug nach Anspruch 9,
**dadurch gekennzeichnet,**
**dass** die dem Grundkörper abgewandte Oberfläche der Beschichtung (24) mit einer Veredelungsschicht (30) aus einem dritten Material versehen ist.

11. Herstellvorrichtung zum Herstellen von Kunststoffformteilen, **gekennzeichnet durch** ein Formwerkzeug (10) nach einem der Ansprüche 6 bis 10.

12. Verwendung eines Formwerkzeuges nach einem der Ansprüche 6 bis 10 oder einer Herstellvorrichtung nach Anspruch 11 oder eines durch das Formwerkzeugherstellverfahren nach einem der Ansprüche 1 bis 5 hergestellten Formwerkzeuges, zur Herstellung eines faserverstärkten oder eines nicht-faserverstärkten Kunststoffformteils auf Basis
a) eines Thermoplasts,
a1) das ausgewählt ist aus einer Gruppe, die PE, PSU, PES, SRP, Polyimid, Polyamid und Polyetherimid (PEI) enthält, und/oder
a2) das amorph oder semi-kristallin ist,
oder
b) auf Basis eines Duromers, das ausgewählt aus einer Gruppe, die Epoxidharz, Aminoplast, Phenoplast, Polyacrylat und Polyurethan enthält,

13. Verwendung nach Anspruch 12,
**dadurch gekennzeichnet,**
**dass** das mit dem Formwerkzeug (10) zu formende Kunststoffformteil ein verstärktes Verbundmaterialbauteil mit einem Verstärkungsmaterial ist, das ausgewählt ist aus einer Gruppe, die Fasern, Kohlefasern, Glasfasern, kohlenstoffhaltige Nanopartikel, Siliziumoxid, Titanoxid und Polymere enthält.

14. Verwendung eines Formwerkzeugs nach einem der Ansprüche 6 bis 10 oder einer Herstellvorrichtung nach Anspruch 11 oder eines durch das Formwerkzeugherstellverfahren nach einem der Ansprüche 1 bis 5 hergestellten Formwerkzeuges zur Herstellung von Bauteilen und Großbauteilen für die Luft- und Raumfahrt, von Flugzeugen oder Hubschraubern, für Kraftwerke, wie Windkraftwerke, von Propellern und Rotoren für Windkraftanlagen, in der Kraftfahrzeugindustrie, von Bauteilen von Landfahrzeugen, wie Kraftfahrzeugen.

## Claims

1. Mold producing method for producing a mold (10) for the production of plastic molded parts, comprising:
a) preparing a main body (12) of a first material having a boundary surface (13) formed for forming a mold surface (14),
b) attaching a tempering device (18) for tempering the mold to the boundary surface (13),
c) coating the boundary surface (13) of the main body (12) and the tempering device (18) attached to it by spraying a second material in a spray process to thus completely form the mold surface (14) on a coating (24) of the second material,
wherein the first material is selected from a group of a materials comprising plastic, in particular foamed plastic, ceramics, composite material, fiber-reinforced plastic or ceramic materials, and wherein the second material is selected from a group of materials comprising plastic, plastic foam, light metal, light metal foam, invar as well as invar in combination with other metals, ceramics, carbides or plastic materials.

2. Mold producing method according to claim 1,
**characterized in that** the spray process is a thermal spray process.

3. Mold producing method according to claim 1 or 2,
**characterized in that** step b) comprises:
b1) forming at least one recess (20) in the boundary surface of the main body (12) and
b2) inserting at least one heating or cooling element (22) of the tempering device (18) into said at least one recess.

4. Mold producing method according to claim 3,
**characterized in that** step b) further comprises:
b3) fixing the at least one heating or cooling element (22) by means of fixing elements, particularly clips, adhesive or tacking material.

5. Mold producing method according to any one of the claims 1 to 4, **characterized in that** step a) comprises:
a1) producing the main body (12) of a plastic material by foaming.

6. Mold (10) for producing plastic molded parts, comprising a main body (12) of a first material which is provided on a mold surface (14) with a coating (24) of a second material, wherein in a boundary region between the main body (12) and the coating (24) a tempering device (18) is provided that is embedded between the first and the second material obtainable by a method according to one of the claims 1 to 5,
wherein the first material is selected from a group of materials comprising plastic, in particular foamed plastic, ceramics, composite material, fiber-reinforced plastic or ceramic materials and
wherein the second material is selected from the group of materials comprising plastic, plastic foam, light metal, light metal foam, invar as well as invar in combination with other metals, ceramics, carbides or plastic materials and
wherein the second material is applied to the main body (12) by a spray process.

7. Mold according to claim 6,
**characterized in that** the second material is applied to the main body (12) using a thermal spray process.

8. Mold according to any one of the claims 6 and 7,
**characterized in that** the tempering device (18) at least comprises a heating and/or cooling passage (26) or conduit for a heating or cooling medium and/or at least electrical heat conductors.

9. Mold according to any one of the claims 6 to 8,
**characterized in that** the main body (12) is provided on its boundary surface (13) to the coating (24) with at least one recess (20) in which the tempering device (18) is accommodated, wherein the main body (12) and the tempering device inserted in said at least one recess (18) are collectively coated with the second material.

10. Mold according to claim 9,
**characterized in that** the surface of the coating (24) turned away from the main body is provided with a finishing layer (30) of a third material.

11. Production device for producing plastic molded parts, **characterized by** a mold (10) according to one of the claims 6 to 10.

12. Use of a mold according to one of the claims 6 to 10 or a production device according to claim 11 or a mold produced by the mold producing method according to one of the claims 1 to 5, for producing a fiber-reinforced or a non-fiber-reinforced plastic molded part on the basis of
a) a thermoplast that
a1) is selected from a group comprising PE, PSU, PES, SRP, polyimide, polyamide, and polyetherimide (PEI) and/or
a2) that is amorphous or semi-crystalline, or
b) on the basis of a duromer that is selected from a group comprising epoxy resin, aminoplast, phenoplast, polyacrylate and polyurethane.

13. Use according to claim 12,
**characterized in that** the plastic molded part to be formed by means of the mold (10) is a reinforced composite material component comprising a reinforcing material that is selected from a group comprising fibers, carbon fibers, glass fibers, carbonaceous nano particles, silicon oxide, titanium oxide, and polymers.

14. Use of a mold according to one of the claims 6 to 10 or of a production device according to claim 11 or of a mold produced by the mold production method according to one of the claims 1 to 5, for producing components and large-size components for the aerospace industry, of aircrafts or helicopters, for power plants such as wind power plants, of propellers and rotors for wind power plants, in the automotive industry, of components for land vehicles such as automobiles.

## Revendications

1. Procédé de réalisation d'un outil de moulage pour réaliser un outil de moulage (10) destiné à la fabrication de pièces moulées en matière plastique, consistant à :
a) fournir un corps de base (12) en un premier matériau présentant une surface limite (13) moulée pour former une surface de moulage (14),
b) monter un moyen de mise à température (18) pour tempérer l'outil de moulage sur la surface limite (13),
c) revêtir la surface limite (13) du corps de base (12) et du moyen de mise à température (18) monté sur celui-ci, par projection d'un second matériau par un procédé de projection, afin de réaliser ainsi la surface de moulage (14) complètement sur un revêtement (24) en le second matériau,
dans lequel le premier matériau est choisi parmi un groupe de matériaux comprenant la matière plastique, en particulier la matière plastique moussée, la céramique, le matériau composite, la matière plastique ou céramique renforcée de fibres, et
dans lequel le second matériau est choisi parmi un groupe de matériaux comprenant la matière plastique, la matière plastique en mousse, le métal léger, le métal léger en mousse, l'invar ainsi que l'invar en combinaison avec d'autres métaux, des céramiques, des carbures ou des matières plastiques.

2. Procédé de réalisation d'un outil de moulage selon la revendication 1, **caractérisé en ce que**
le procédé de projection est un procédé de projection thermique.

3. Procédé de réalisation d'un outil de moulage selon la revendication 1 ou 2,
**caractérisé en ce que**
l'étape b) consiste à :
b1) ménager au moins un évidement (20) dans la surface limite du corps de base (12) et
b2) poser au moins un élément de chauffage ou de refroidissement (22) du moyen de mise à température (18) dans ledit au moins un évidement (20).

4. Procédé de réalisation d'un outil de moulage selon la revendication 3, **caractérisé en ce que**
l'étape b) consiste en outre à :
b3) fixer ledit au moins un élément de chauffage ou de refroidissement (22) au moyen d'éléments de fixation, tels qu'en particulier des attaches, de la colle ou un adhésif.

5. Procédé de réalisation d'un outil de moulage selon l'une des revendications 1 à 4,
**caractérisé en ce que**
l'étape a) consiste à
a1) réaliser le corps de base (12) par moussage en une matière plastique.

6. Outil de moulage (10) pour fabriquer des pièces moulées en matière plastique, comportant un corps de base (12) en un premier matériau qui est pourvu d'un revêtement (24) en un second matériau sur une surface de moulage (14), et dans une zone limite entre le corps de base (12) et le revêtement (24), il est prévu un moyen de mise à température (18) qui est noyé entre le premier et le second matériau,
susceptible d'être obtenu par un procédé selon l'une des revendications 1 à 5,
dans lequel le premier matériau est choisi parmi un groupe de matériaux comprenant la matière plastique, en particulier la matière plastique moussée, la céramique, la matière plastique ou céramique renforcée de fibres, et
dans lequel le second matériau est choisi parmi un groupe de matériaux comprenant la matière plastique, la matière plastique en mousse, le métal léger, le métal léger en mousse, l'invar ainsi que l'invar en combinaison avec d'autres métaux, des céramiques, des carbures ou des matières plastiques, et
dans lequel le second matériau est projeté sur le corps de base (12) dans un procédé de projection.

7. Outil de moulage selon la revendication 6,
**caractérisé en ce que**
le second matériau est projeté sur le corps de base (12) par un procédé de projection thermique.

8. Outil de moulage selon l'une des revendications 6 et 7,
**caractérisé en ce que**
le moyen de mise à température (18) comprend au moins un canal (26) ou conduit de chauffage et/ou de refroidissement pour le fluide de chauffage ou de refroidissement et/ou au moins un conducteur électrique chauffant.

9. Outil de moulage selon l'une des revendications 6 à 8,
**caractérisé en ce que**
sur la surface limite (13) vers le revêtement (24), le corps de base (12) est pourvu d'au moins un évidement (20) dans lequel est reçu le moyen de mise à température (18), le corps de base (12) et le moyen de mise à température inséré dans ledit au moins un évidement (18) étant revêtus conjointement du second matériau.

10. Outil de moulage selon la revendication 9,
**caractérisé en ce que**
la surface du revêtement (24) détournée du corps de base est pourvue d'une couche de valorisation (30) en un troisième matériau.

11. Dispositif de fabrication de pièces moulées en matière plastique, **caractérisé par** un outil de moulage (10) selon l'une des revendications 6 à 10.

12. Utilisation d'un outil de moulage selon l'une des revendications 6 à 10 ou d'un dispositif de fabrication selon la revendication 11 ou d'un outil de moulage réalisé par le procédé de réalisation d'outil de moulage selon l'une des revendications 1 à 5, pour fabriquer une pièce moulée en matière plastique renforcée de fibres ou non pas renforcée de fibres à la base
a) d'un thermoplastique,
a1) qui est choisi parmi le groupe comprenant le PI, le PSU, le PES, le SRP, le polyimide, le polyamide et le polyétherimide (PEI), et/ou
a2) qui est amorphe ou semi-cristallin,
ou
b) à la base d'un duromère choisi parmi un groupe comprenant la résine époxy, l'aminoplaste, le phénoplaste, le polyacrylate et le polyuréthanne.

13. Utilisation selon la revendication 12,
**caractérisée en ce que**
la pièce moulée en matière plastique à mouler avec l'outil de moulage (10) est une pièce en matériau composite renforcé avec un matériau de renforcement choisi parmi le groupe comprenant les fibres, les fibres de carbone, les fibres de verre, les nanoparticules contenant du carbone, l'oxyde de silicium, l'oxyde de titane et les polymères.

14. Utilisation d'un outil de moulage selon l'une des revendications 6 à 10 ou d'un dispositif de fabrication selon la revendication 11 ou d'un outil de moulage réalisé par le procédé de réalisation d'outil de moulage selon l'une des revendications 1 à 5, pour fabriquer des pièces de construction et des pièces de construction de grande taille pour l'aéronautique et l'aérospatiale, des avions ou des hélicoptères, pour des centrales, telles que des centrales éoliennes, des hélices et des rotors d'installation éoliennes, dans l'industrie automobile, des pièces de construction de véhicules terrestres, tels que des véhicules automobiles.
